# FASCICULE DE BREVET EUROPEEN

(11) **EP 1 932 042 B1**
(45) Date de publication et mention de la délivrance du brevet: **21.04.2010**
(21) Numéro de dépôt: 06793445.5
(22) Date de dépôt: 12.09.2006
(51) Int. Cl.: G02B 6/48

(54) **MACHINE DE POSE DE CABLE OPTIQUE AUTOUR D'UN CABLE PORTEUR**
MASCHINE ZUM LEGEN EINES OPTISCHEN KABELS UM EINE SUSPENSIONSADER HERUM
MACHINE FOR LAYING AN OPTICAL CABLE AROUND A SUSPENSION STRAND

(30) Priorité: 15.09.2005 FR 0552773
(43) Date de publication de la demande: 18.06.2008
(73) Titulaire: AREVA T&D SA, 92084 Paris La Défense Cedex (FR)
(72) Inventeur: CHAUVET, Patrick, F-95610 Eragny-sur-Oise (FR); MARTIN, René, F-92310 Sèvres (FR)
(74) Mandataire: Remy, Vincent Noel Paul
(86) Numéro de dépôt international: PCT/EP2006/066269
(87) Numéro de publication internationale: WO 2007/031510

(56) Documents cités:
- WO-A-96/32661
- DE-A1- 19 820 037
- GB-A- 708 227
- GB-A- 2 173 471
- US-A- 3 057 600
- CARTER C N ET AL ELECTROCHEMICAL SOCIETY: "THE DEVELOPMENT OF WRAP-ON OPTICAL CABLES FOR USE ON THE EARTHWIRES OF HIGH VOLTAGE POWER LINES" ULSI SCIENCE AND TECHNOLOGY 1987. PHILADELPHIA, MAY 11 - 15, 1987, PROCEEDINGS OF THE INTERNATIONAL SYMPOSIUM ON ULTRA LARGE SCALE INTEGRATION SCIENCE AND TECHNOLOGY, PENNINGTON, ELECTROCHEMICAL SOCIETY, US, vol. SYMP. 1, 28 août 1988 (1988-08-28), pages 1-6, XP002406911
- PATENT ABSTRACTS OF JAPAN vol. 010, no. 188 (P-473), 3 juillet 1986 (1986-07-03) -& JP 61 032803 A (ELECTRIC POWER DEV CO LTD; others: 01), 15 février 1986 (1986-02-15)
- PATENT ABSTRACTS OF JAPAN vol. 012, no. 144 (P-697), 6 mai 1988 (1988-05-06) -& JP 62 264007 A (FURUKAWA ELECTRIC CO LTD:THE), 17 novembre 1987 (1987-11-17)

## Description

### DOMAINE TECHNIQUE

L'invention concerne une machine de pose de câble, notamment de câble optique, autour d'un câble porteur, par exemple un câble électrique aérien à haute tension.

Plus précisément, elle concerne une machine comprenant un chariot constitué d'un châssis ayant une première et une seconde extrémités reliées par une ossature et de deux roues montées aux extrémité du châssis et aptes à rouler sur le câble porteur ; un ensemble tournant comprenant un rotor monté tournant sur un châssis ; des moyens d'entraînement du rotor autour de son axe de rotation.

On connaît déjà (GB 2 173 471) une machine de pose de câble de ce type. Elle possède un chariot comportant à chacune de ses extrémités des galets de roulement aptes à rouler sur lé câble porteur. Des pignons d'entraînement coniques sont solidaires des galets et tournent en même temps qu'eux. Une couronne dentée intérieurement, prévue à l'arrière du chariot, est montée sur trois pignons satellite disposés à 120° l'un de l'autre qui engrènent avec sa denture intérieure. L'un de ces pignons tourne librement et les deux autres sont respectivement solidaires d'une extrémité d'un arbre tournant entraîné par chacun des deux pignons coniques solidaires des galets de roulement. Ainsi, la couronne dentée est entraînée en rotation autour du câble porteur. La bobine de fil est portée extérieurement par la couronne dentée. Quand le chariot roule sur le câble, la fibre optique est dévidée à partir de la bobine et enroulée en spirale sur le câble porteur.

Une machine de ce type présente plusieurs inconvénients.
a) elle est longue à mettre en place sur le câble porteur en particulier parce que cette opération nécessite de démonter certaines pièces de la machine et de les remonter ensuite. De même, lorsque le spiralage de la fibre optique sur le câble est terminé, elle est longue à retirer du câble parce qu'il faut à nouveau répéter les mêmes opérations en sens inverse. Il s'agit là d'un inconvénient important parce que le temps de mise en place et de retrait de la machine est prépondérant par rapport au temps de spiralage. En d'autres termes, il faut plus de temps pour mettre en place la machine et la retirer que pour effectuer le spiralage du câble optique proprement dit. Le temps global de l'opération de spiralage est donc fortement augmenté et le rendement de la machine diminué.
b) cette machine connue ne permet pas de franchir des manchons de raccordement de diamètre 80mm. En effet, les tronçons de câble sont raccordés par des manchons dont le diamètre est plusieurs fois supérieur au diamètre du câble et peuvent-être déformés et représenter un diamètre équivalent à 80mm. Le chariot ne prévoit pas un espace suffisant pour permettre le passage de ces manchons déformés.
c) cette machine connue est entraînée par une traction le long du câble porteur aérien. Ce mode d'entraînement nécessite la mise en place d'installation de treuillage complexe.
d) il y a un risque de patinage des roues. En effet, le mouvement de rotation du rotor est déduit du mouvement du roulement des roues de sustentation sur le câble porteur. En d'autres termes, ce sont les roues de sustentation qui fournissent l'énergie nécessaire à l'entraînement en rotation du rotor. Il y a donc un risque, si le couple à fournir est trop important, que les roues patinent sur le câble ce qui, d'une part, risque de l'endommager et, d'autre part, ne permet pas de réaliser l'opération de spiralage du câble optique sur le câble porteur.

Le document de C. CARTER ET AL (ELECTROCHEMICAL SOCIETY: "THE DEVELOPMENT OF WRAP-ON OPTICAL CABLES FOR USE ON THE EARTHWIRES OF HIGH VOLTAGE POWER LINES" ULSI SCIENCE AND TECHNOLOGY 1987. PHILADELPHIA, MAY 11-15, 1987, PROCEEDINGS OF THE INTERNATIONAL SYMPOSIUM ON ULTRA LARGE SCALE INTEGRATION SCIENCE AND TECHNOLOGY, PENNINGTON, ELECTROCHEMICAL SOCIETY, US, vol. SYMP. 1, 28 août 1988 (1988-08-28), pages 1-6,) décrit une autre machine de pose de câble optique autour d'un câble porteur.

L'invention a pour objet une machine de pose de câble optique autour d'un câble porteur qui remédie à ces inconvénients. Ces buts sont atteints par le fait que l'ossature comporte un passage de câble de manière à permettre l'introduction du câble porteur dans l'ossature ; le rotor étant monté tournant sur le châssis par l'intermédiaire de deux paliers interrompus par des passages de câble alignés avec le passage câble de l'ossature ; le rotor comportant également un passage de câble, chaque passage de câble ayant une largeur au moins égale au diamètre du câble porteur de manière à permettre l'introduction de câble porteur dans l'ossature lorsque les passages de câble de l'ossature et des paliers sont alignés avec le passage câble du rotor.

Selon l'invention le châssis et le rotor comportent chacun un anneau de relevage, l'orientation de ces anneaux par rapport aux passages de câble étant telles que, lorsque la machine est suspendue aux anneaux, le passage de câble du rotor et les passages de câble des paliers sont alignés et' orientés vers le bas de manière à permettre l'introduction du câble porteur dans l'espace intérieur du rotor lorsque le chariot est mis en place sur le câble porteur par un mouvement de descente verticale.

Grâce à l'invention, la machine peut être mise en place sur le câble porteur de manière simple et rapide, sans avoir à démonter quelque organe que ce soit. De la même manière, après la fin du spiralage, la machine peut être retirée du câble porteur sans avoir à effectuer d'opération de démontage. Le temps de mise en place et de retrait de la machine est donc diminué. Il devient peu important par rapport au temps de spiralage proprement dit de sorte que le rendement de la machine est amélioré.

De préférence, le rotor comporte une barre de guidage du câble porteur disposé au bord de son passage de câble et qui, lorsque la machine est suspendue par les anneaux de relevage, est orientée sensiblement verticalement.

Grâce à ces caractéristiques, la machine peut être mise en place sur le câble porteur par un mouvement de descente verticale. La machine étant suspendue, par exemple sous un hélicoptère, il suffit d'amener la barre de guidage en contact avec le câble porteur puis de descendre verticalement la machine pour la mettre en place. Le retrait s'effectue tout aussi simplement. Lorsqu'une traction est exercée sur les anneaux de relevage, ceci a pour effet d'aligner les passages de câble des paliers et le passage du rotor et de les aligner vers le bas de sorte qu'un simple mouvement vertical de bas en haut suffit à retirer la machine du câble porteur.

Dans une réalisation préférée, le rotor comporte d'une part une fusée apte à recevoir la bobine et d'autre part un dispositif d'équilibrage de cette bobine, la fusée et le dispositif d'équilibrage étant situés dans un plan sensiblement horizontal lorsque la machine est suspendue par ses anneaux de relevage.

Grâce a cette caractéristique préférée, la fusée et le dispositif d'équilibrage étant dans un plan horizontal, n'interfèrent pas avec le câble lorsque la machine est mise en place sur le câble porteur ou lorsqu'elle en est retirée.

Dans une réalisation particulière les moyens d'entraînements en rotation du rotor autour de son axe de rotation comprennent :
a) une couronne dentée menée solidaire d'une première extrémité du rotor et comportant un passage de câble aligné avec celui du rotor ;
b) deux pignons de transmission engrenant chacun avec la couronne dentée, l'espacement entre les points d'engrènement des deux pignons étant au moins égal à la largeur de passage de câble de la couronne dentée.

Avantageusement les deux pignons de transmission sont deux pignons jumeaux entraînés simultanément par un pignon d'entraînement commun.

Dans une variante, les deux pignons jumeaux sont couplés par un pignon de couplage.

De préférence, le châssis comprend un élément tubulaire coaxial au rotor et comportant un passage de câble aligné avec les passage de câble des paliers, l'élément tubulaire comportant un passage de câble ayant un largeur au moins égale au diamètre du câble porteur de manière à permettre l'introduction du câble porteur dans l'élément tubulaire.

De préférence le châssis comporte une console à chacune des extrémités de l'élément tubulaire, chaque console supportant une roue du chariot.

Le rotor est monté tournant sur l'élément tubulaire du chariot par l'intermédiaire de paliers à roulement répartis à la périphérie de l'élément tubulaire, sauf en regard du passage de câble.

Conformément à une autre caractéristique importante de l'invention, la machine permet le franchissement des manchons de raccordement de deux tronçons de câble porteur. A cet effet, l'espace intérieur de l'élément tubulaire présente une plus petite dimension intérieure au moins égale au diamètre d'un manchon de raccordement de deux tronçons de câble porteur. Typiquement, la plus petite dimension intérieure de l'élément tubulaire est au moins égale à 80mm.

Le diamètre des roues du chariot est au moins égal à quatre fois le diamètre d'un manchon de raccordement de deux tronçons du câble porteur. Cette caractéristique permet d'escalader facilement les manchons de raccordement. Typiquement, le diamètre des roues du chariot est au moins égal à 320mm.

Enfin, la distance entre un point de contact d'une roue du chariot et une extrémité de l'élément tubulaire la plus proche de cette roue est inférieure à la longueur d'un manchon de raccordement de deux tronçons du câble porteur.

D'autres caractéristiques et avantages de l'invention apparaîtront encore à la lecture de la description qui suit d'un exemple de réalisation donné à titre illustratif en référence aux figures annexées. Sur ces figures :
- la figure 1 est une vue en élévation de la machine de pose de câble optique de l'invention et la figure 2 est une vue de dessus de cette même machine ;
- la figure 3 est une vue en coupe transversale de la machine des figures 1 et 2;
- la figure 4 est une vue en élévation représentant le chariot seul ;
- la figure 5 est une vue schématique en perspective d'une partie essentielle de l'ensemble tournant ;

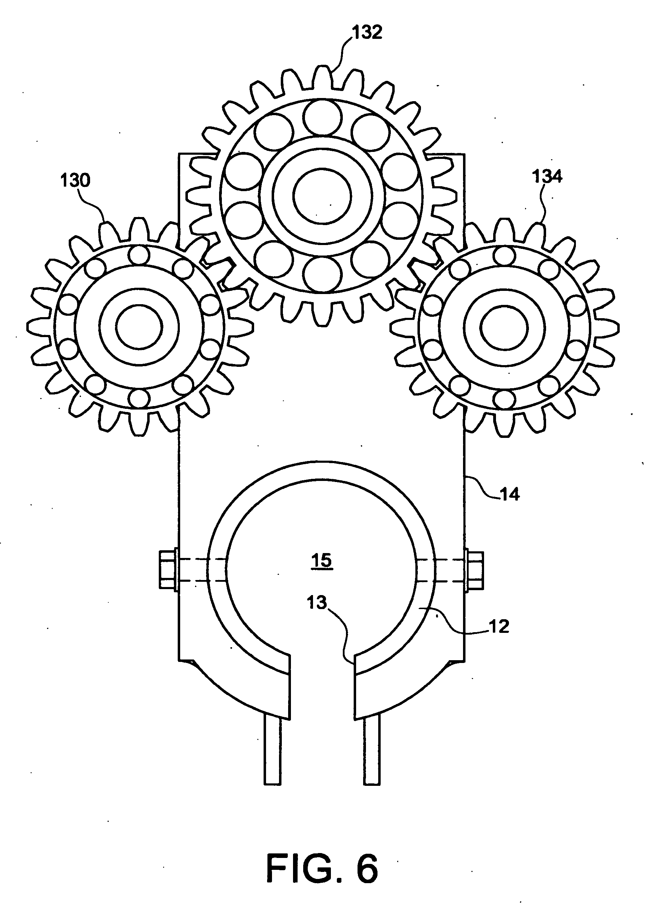

- la figure 6 est une vue de face d'engrenages de transmission du mouvement de rotation à la roue arrière ;
- la figure 7 est une vue du bras presseur faisant partie de l'ensemble tournant ;
- la figure 8 est une vue schématique en perspective qui illustre le principe de fonctionnement des anneaux de relevage de la machine ;
- la figure 9 est une vue schématique en perspective qui illustre la transmission du mouvement de rotation de la roue avant vers la roue arrière.

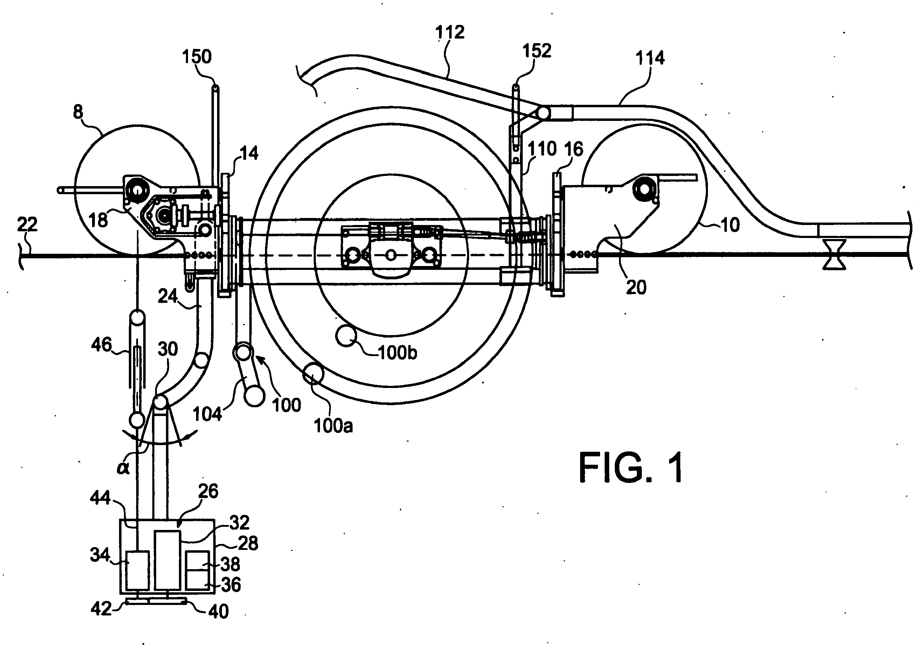

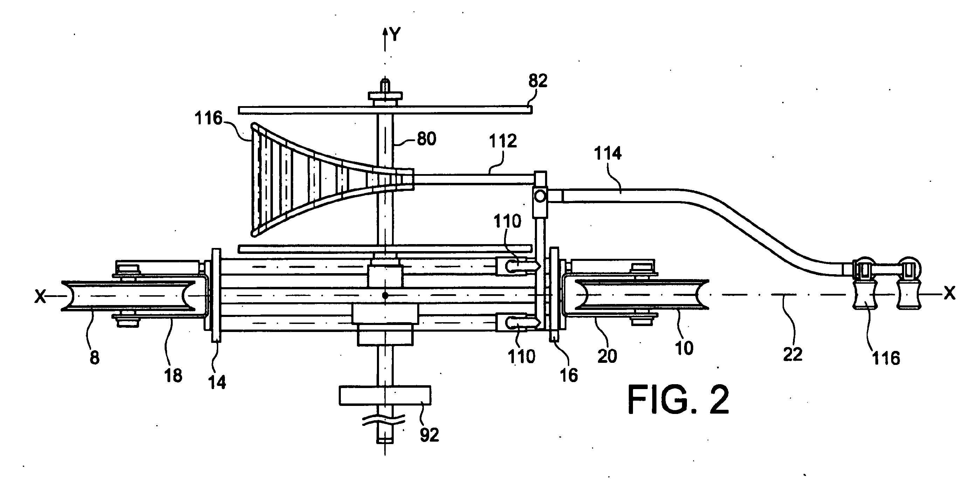

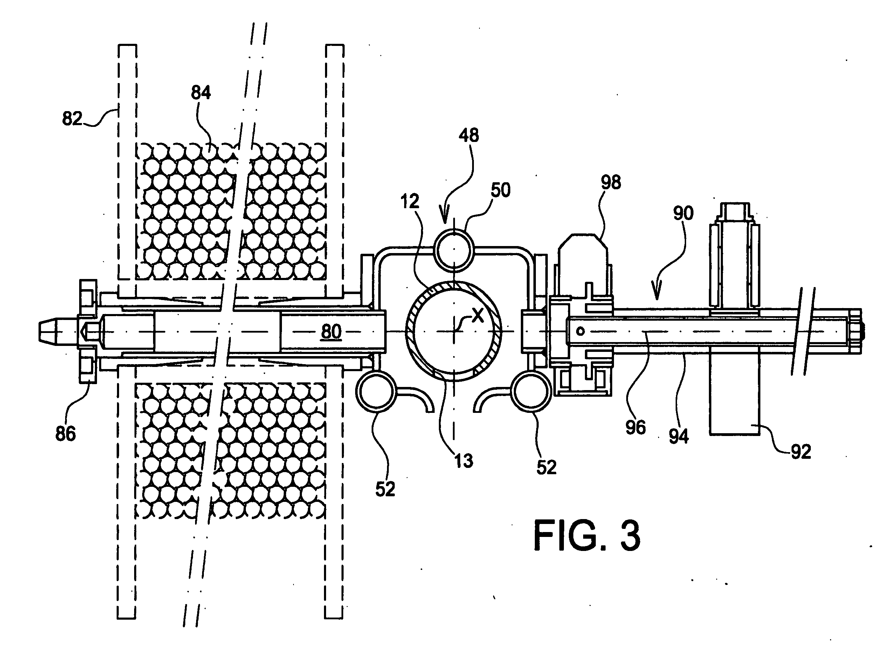

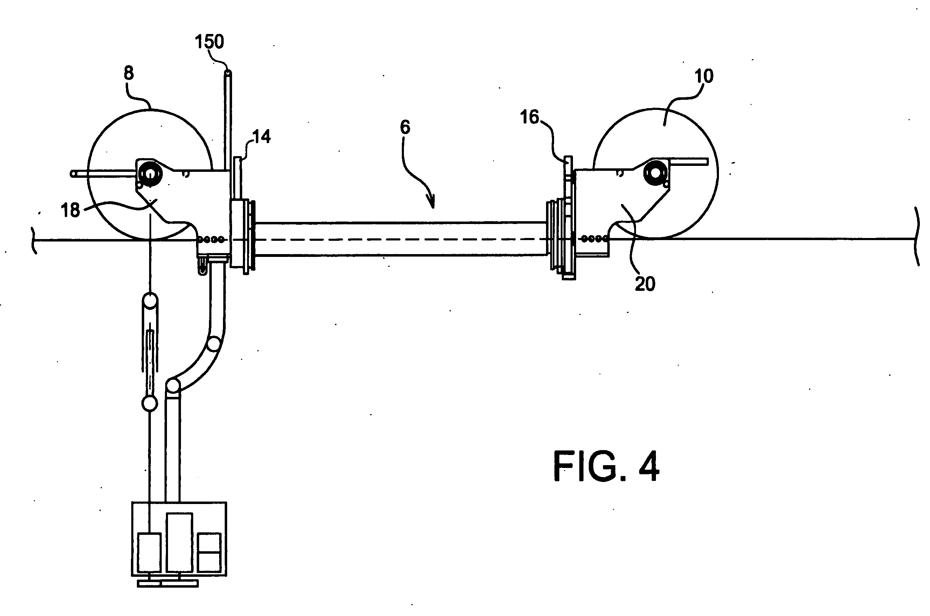

La machine de pose de câble optique de l'invention est constituée d'un chariot désigné par la référence générale 2 et d'un ensemble tournant désigné par la référence générale 4, monté tournant sur le chariot. Comme on peut le voir sur les figures 1 et 2 et, également sur la figure 4 qui représente le chariot seul, le chariot est constitué d'un châssis 6 supportant une roue avant 8 et une roue arrière 10. Le châssis 6 lui-même est constitué d'une ossature allongée 12 qui est représentée en coupe sur la figure 3. Dans l'exemple représenté, l'ossature allongée se présente sous la forme d'un tube d'axe longitudinal XX. Le tube comporte une fente 13 dont la fonction est de permettre l'introduction du câble porteur à l'intérieur 15 du tube. Pour cette raison, la largeur de la fente 13 est au moins égale au diamètre maximal que peut prendre le câble porteur. L'ossature tubulaire 12 est solidaire, à une extrémité avant, d'une console montante avant 14 et à une extrémité arrière d'une console montante arrière 16. Deux bras avant parallèles 18 s'étendent perpendiculairement à la console avant. Les deux bras 18 supportent la roue avant du chariot 8. De la même manière, deux bras parallèles 20 s'étendent perpendiculairement à la console montante arrière 16. Ces deux bras supportent la roue arrière 10 du chariot. Les roues avant et arrière 8, 10 sont de préférence des roues à gorge munies d'un bandage en caoutchouc pour favoriser l'adhérence sur le câble porteur sans l'abîmer. De plus, le diamètre des roues 8 et 10 est relativement important par rapport au diamètre du câble.

La console avant 14 est prolongée vers le bas par un bras 24 laissant libre la fente 13 de l'ossature tubulaire 12. Le bras 24 porte un groupe d'entraînement 26 installé dans une nacelle 28 reliée au bras 24 par une articulation 30 d'axe transversal c'est-à-dire orthogonal à l'axe général XX de la machine et au câble porteur 22. La nacelle 28 peut ainsi balancer comme schématisé par l'angle α, et permettre au chariot 2 de prendre une pente négative ou positive sur le câble près d'un pylône, la nacelle 28 et le groupe d'entraînement 26 restant suspendus librement à la verticale. Le groupe d'entraînement 26 se compose d'un moteur thermique 32 et d'une transmission avec son embrayage 34 pour entraîner le chariot. Il comporte également la commande 36 du moteur ainsi que le récepteur 38 de télécommande, ainsi qu'une batterie (non représentée). Le moteur thermique 32 a un axe vertical débouchant sous la nacelle 28 et portant un pignon droit 40 qui engrène avec la roue 42 d'entrée de l'embrayage 34. Dans une variante, une transmission à poulie et courroie assure le même effet. La sortie est reliée à un arbre à cardan 44 avec une partie télescopique 46 de façon à pouvoir s'allonger et suivre le basculement de la nacelle 28 par rapport au chariot 2. Comme on l'expliquera plus en détail ultérieurement le groupe d'entraînement entraîne également la roue arrière 10 du chariot de telle sorte que les deux roues sont motrices, ce qui constitue une caractéristique avantageuse de la machine de l'invention parce que cela améliore sa motricité.

La nacelle 28 peut être retirée. Elle pèse une quarantaine de kilos. Du côté du moteur, on retire une goupille du cardan. On peut aussi utiliser un cardan à débrayage ou tout autre moyen adéquat. La nacelle, de son côté est suspendue à un crochet et maintenue par une goupille de sécurité.

Du fait de son entraînement autonome, la machine de l'invention ne nécessite aucune installation de câble de traction et permet de commander un mouvement régulier d'avancement sur tout le trajet du câble aérien entre deux pylônes et d'absorber les fortes pentes au départ et à l'arrivée sur un pylône.

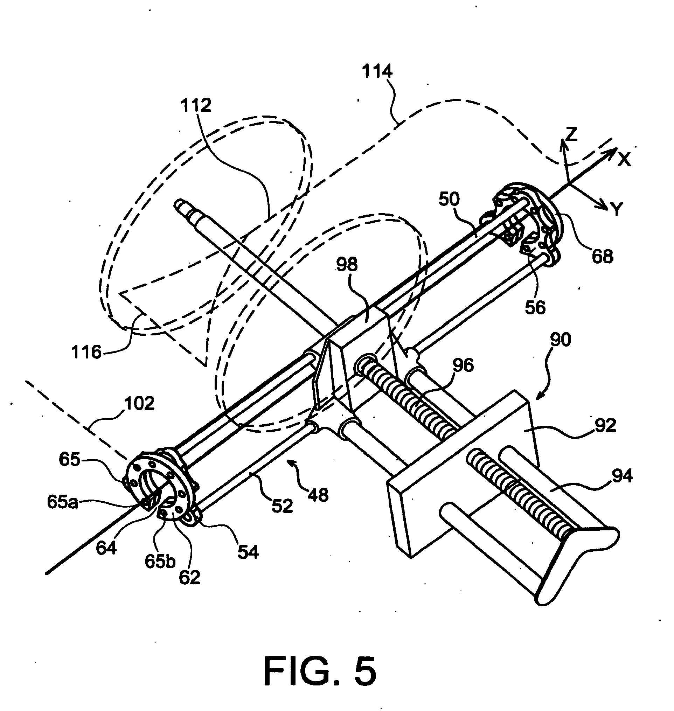

Comme on peut le voir sur les figures 1 et 2, et mieux encore sur la figure 5, l'ensemble tournant 4 comprend un rotor 48 de forme générale allongée qui est monté tournant autour de l'ossature tubulaire 12.

Le rotor 48 comprend trois barres, à savoir une barre supérieure 50 et deux barres inférieures 52. Comme on peut le voir plus particulièrement sur la figure 3, ces trois barres sont disposées au sommet d'un triangle équilatéral. Elles sont soudées, à une extrémité avant, à un flasque avant 54, et à une extrémité arrière, à un flasque arrière 56.

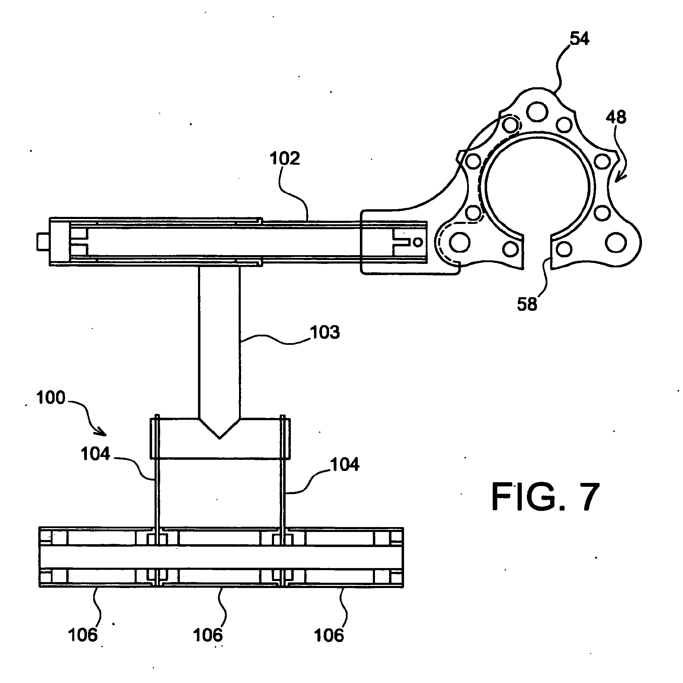

Comme on peut le voir sur la figure 7, le flasque avant 54 comporte une fente 58 dont la fonction, comme celle de la fente 13 mentionnée précédemment, est de permettre le passage du câble porteur. De la sorte, la largeur de la fente 58 doit être au moins égale au plus grand diamètre possible du câble porteur. De la même manière, le flasque arrière 56 comporte une fente 60 (voir figure 5) dont la largeur est égale à celle de la fente 58.

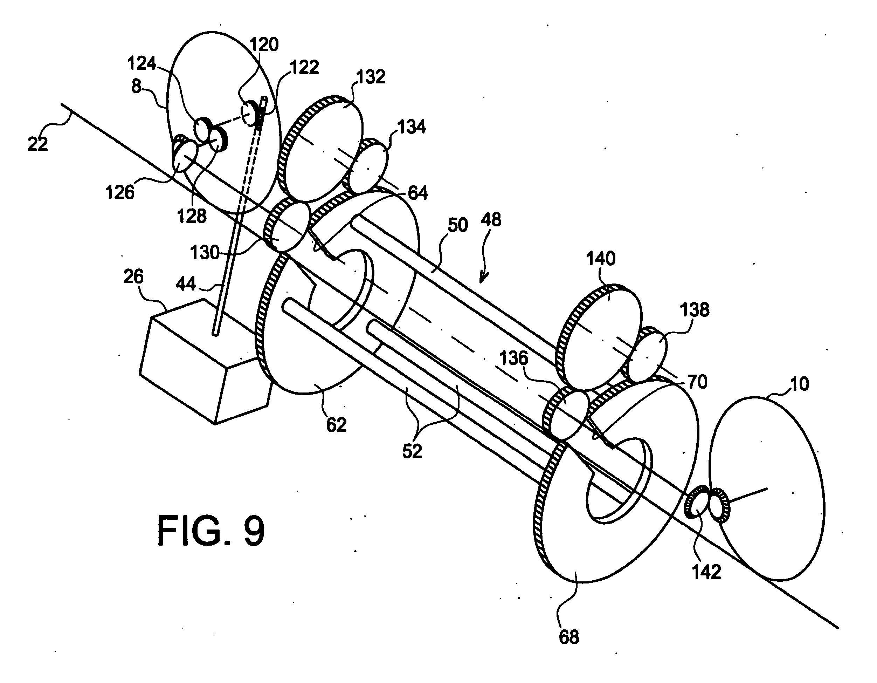

Le flasque avant 54 supporte une couronne dentée avant 62 muni d'une fente 64 dont la fonction est identique, à savoir permettre le passage du câble porteur. Par conséquent, sa largeur est égale, de préférence, à la largeur des fentes 58 et 60. La couronne dentée avant 62 est munie de galets 65 (voir figures 5 et 9). Les galets 65 constituent une partie des paliers permettant la rotation de l'ensemble tournant 4 sur le chariot. On notera que deux des galets, les galets 65a et 65b, sont espacés l'un de l'autre d'une distance au moins égale à la largeur de la fente 64 de manière à ménager un passage de câble dans le rotor. Les portées correspondantes des paliers situés sur le chariot et sur laquelle les galets roulent comportent bien entendu un passage libre identique dans le même but.

De la même manière, le flasque arrière 56 porte une couronne dentée arrière 68 munie d'une fente 70 (voir figure 9). Ainsi, comme on le constate, le rotor 48 a une structure entièrement fendue. Les deux barres inférieures 52 disposées parallèlement l'une à l'autre, sont écartées l'une de l'autre d'une distance supérieure à la largeur des fentes, respectivement, des flasques 54 et 56 et des couronnes dentées 62 et 68. De la sorte, le câble peut être introduit à l'intérieur du rotor de manière à occuper, sensiblement, la position de l'axe longitudinal XX du rotor. De plus, étant donné que l'ossature tubulaire 12 est montée à l'intérieur des tubes 50 et 52 lorsque la fente 13 de l'ossature tubulaire 12 est alignée avec la fente du rotor 48, le câble porteur 22 peut pénétrer à l'intérieur de l'ossature tubulaire 12.

Le rotor 48 porte une fusée 80 (voir figure 3) perpendiculaire à l'axe longitudinal XX du rotor. La fusée est destinée à recevoir une bobine 82 de fibre optique 84. Elle est maintenue par une butée amovible 86. De préférence, un couple de freinage est exercé par un moyen non représenté sur la bobine 82 pour quelle ne se dévide pas d'elle-même mais exerce une certaine tension sur le câble dévidé pour le spiralage.

Dans une position diamétralement opposée à celle de la fusée 80, le rotor 48 porte un dispositif d'équilibrage 90 de la bobine 82 chargé du câble optique enroulé 84. Ce dispositif d'équilibrage 90 comporte un contrepoids 92 guidé par des rails 94 constitué par deux tubes parallèles dirigés radialement sur lesquels glisse le contrepoids. Le contrepoids 92 est engagé sur une vis mère 96 entraînée en rotation par un réducteur à vis 98. Le réducteur 98 est relié à des moyens de guidage et de mesure du câble optique débité par un axe et un pignon non représentés. La vis mère 96 engrène avec un logement taraudé du contrepoids et le déplace en le rapprochant de l'axe géométrique XX de l'installation au fur et à mesure du dévidage du câble optique. Le retour du contrepoids vers sa position située à l'extérieur, lors du remplacement d'une bobine vide par une bobine pleine se fait par débrayage du taraudage du contrepoids pour le pousser vers l'extérieur sur les rails 94 et la vis mère 96. Le réducteur à vis 98 est associé au moyen de dévidage du câble optique pour déplacer le contrepoids vers l'intérieur en fonction du dévidage du câble optique c'est-à-dire en fonction de la réduction de la masse de la bobine.

L'ensemble tournant 4 (figure 7) comporte encore un bras presseur 100 dont la fonction est d'appuyer sur le câble optique 84 de la bobine 82 afin de l'empêcher de se détendre et de se dévider. Ce bras presseur est représenté en détail sur la figure 7. Il est articulé autour d'un axe 102 monté sensiblement perpendiculairement à la direction principale du rotor 48. Dans l'exemple représenté, le bras presseur 100 est dirigé vers le bas comme on peut le voir plus particulièrement sur la figure 1 et comporte un support en T 103. De joues 104 sont montées aux extrémités de la barre du T. Les joues 104 portent trois rouleaux 106 dont la largeur correspond sensiblement à la largeur de la bobine 82. De manière conventionnelle, les rouleaux 106 sont montés tournant sur des paliers ou sur des roulements. Le bras 100 est appliqué sur le câble optique 84 par des moyens de sollicitation (non représentés) tels qu'un ressort de manière à suivre le dévidement du câble optique comme schématisé par les positions 100a et 100b sur la figure 1. La référence 100a désigne la position du bras lorsque la bobine est pleine tandis que la référence 100b désigne la position de ce même bras lorsque la bobine est vide ou pratiquement vide.

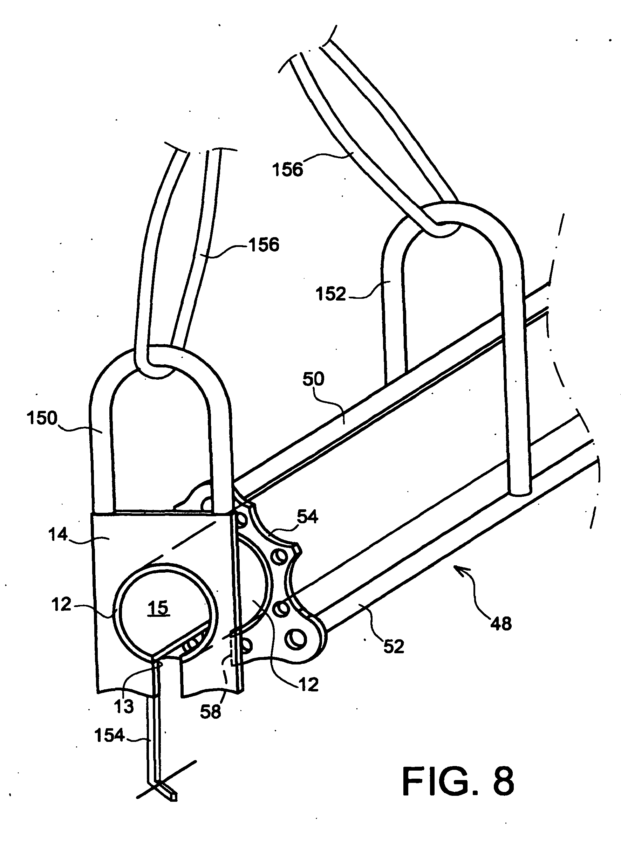

Enfin, l'ensemble tournant 4 comporte des moyens de guidage du câble optique vers son point d'enroulement sur le câble porteur 22. Ces moyens, visibles plus particulièrement sur les figures 1 et 2, ainsi que sur la figure 8 sont constitué d'un mât vertical 110 fixé sur le rotor. Le mât porte vers la partie avant de la machine, un bras avant 112 et, vers la partie arrière un bras arrière 114. Comme on peut le voir sur la figure 2, le bras avant 112 porte une rampe courbe 116, en forme d'entonnoir dont la largeur va décroissant vers l'arrière de la machine. L'extrémité avant de la rampe courbe correspond sensiblement à la largeur de la bobine 82. Elle comporte des butées latérales pour guider le câble. Le bras arrière 114 comporte des moyens de guidage du câble optique non représenté jusque vers une extrémité 116 comportant des diabolos qui permettent d'enrouler le câble sur le câble porteur 22.

Ce rotor est monté tournant sur le châssis par l'intermédiaire de deux paliers. Ces paliers peuvent être des paliers lisses mais ils sont, de préférence, constitués par une série d'organes de roulement tels que des galets ou roulement à billes pour recevoir un chemin de circulation formé à chacune des extrémités du rotor. Le chemin s'engage sur ces organes de roulement et roule sur ceux-ci.

Conformément à une caractéristique importante de l'invention, le groupe d'entraînement 26 entraîne simultanément la roue avant 8 et la roue arrière 10 par l'intermédiaire du rotor 48 jouant le rôle d'un arbre de transmission.

Ce mécanisme d'entraînement est représenté schématiquement en perspective sur la figure 9. La roue avant 8 est entraînée en rotation par l'intermédiaire de l'arbre à cardan 44 entraînant une roue 120 par l'intermédiaire d'une vis tangente 122. Parallèlement un pignon de sortie 124 est entraîné en rotation par l'intermédiaire de l'axe de roue schématisé en trait pointillé. Ce pignon entraîne un couple conique par l'intermédiaire d'un pignon de prise 128. Le couple conique entraîne un premier pignon de transmission 130 qui transmet son mouvement à un pignon de couplage 132 qui engrène lui-même avec un second pignon de transmission 134. Le premier pignon de transmission 130 et le second pignon de transmission 134 entraînent tous les deux avec la couronne dentée interrompue par la fente 64. Les pignons 130 et 134 sont espacés l'un de l'autre d'une distance supérieure à la largeur de la fente. Ainsi, en dépit de la présence de la fente 64 qui interrompt la dentition de la couronne dentée 62, le mouvement est transmis en permanence du moteur vers la couronne dentée 62. Lorsque, comme représenté sur la figure 9, le premier pignon de transmission est en regard de la fente 64 et ne peut, de ce fait, entraîner la couronne dentée 62, le mouvement est transmis au second pignon de transmission 134 par l'intermédiaire du pignon de couplage 132. Dans ce cas de figure, c'est donc le deuxième pignon intermédiaire qui entraîne la couronne dentée. Lorsque, au contraire, c'est le second pignon de transmission 134 qui se trouve en regard de la fente 64, le mouvement de transmission est transmis directement par le premier pignon 130. Dans le cas général, à savoir lorsque aucun des deux pignons 130 et 134 ne se trouve en regard de la fente 64, le couple du moteur est transmis simultanément par les pignons de transmission 130 et 134. Ainsi, grâce à cette astuce de réalisation le mouvement est transmis de manière continue en dépit de la discontinuité de la couronne dentée. Toutefois, il va de soi que d'autres solutions pourraient être envisagée pour atteindre le même but. Par exemple le couple conique 126 pourrait entraîner un pignon d'entraînement (non représenté), ce pignon d'entraînement transmettant son mouvement à deux pignons de transmission espacés l'un de l'autre et engrènant avec la couronne dentée. En d'autres termes cette solution reviendrait à entraîner en rotation le pignon 132 au lieu d'entraîner le pignon 130.

En revenant à la figure 9, la seconde couronne dentée 68 est entraînée par l'intermédiaire du rotor et, plus particulièrement, des barres 50 et 52 jouant le rôle d'un arbre de transmission. Le mouvement est alors retransmis à la roue arrière, en sens inverse. En d'autres termes, comme précédemment, la couronne dentée interrompue par la fente 70 entraîne en rotation soit le premier pignon de transmission 136, soit le second pignon de transmission 138, soit les deux simultanément. Comme précédemment lorsque l'un des pignons 136 ou 138 se trouve en regard de la fente, le mouvement est transmis par l'autre pignon, par l'intermédiaire du pignon de couplage 140. Le premier pignon de transmission 136 est ainsi entraîné en permanence, soit directement soit indirectement par l'intermédiaire du pignon de couplage 140. Ce pignon 136 entraîne alors la roue arrière 10 par l'intermédiaire du couple conique 142 qui renvoie le mouvement à 90°.

On constate ainsi que le groupe d'entraînement 26 est apte à entraîner en rotation la roue avant 8 et la roue arrière 10. Ainsi les deux roues sont motrices. Cette caractéristique est un avantage important dans la mesure où elle permet de démarrer sur une pente pouvant atteindre 30° d'inclinaison. Grâce au grand diamètre des roues, la surface de contact entre le câble porteur 22 et le bandage des roues est importante et les risques de patinage sont éliminés. D'autre part, le groupe d'entraînement a pour fonction à la fois le déplacement du chariot et l'entraînement en rotation du moteur. La totalité de l'énergie nécessaire au fonctionnement de la machine provient donc du groupe d'entraînement et non comme dans l'art antérieur d'une énergie limitée par les forces d'adhérence de la roue sur le câble. Les risques de patinage et de détérioration du câble sont ainsi supprimés.

La figure 8 illustre la manière dont la machine est mise en place sur le câble. Le chariot 2 comporte un anneau de relevage 150 fixé, par exemple, sur la console avant 14. De la même manière, le rotor 48 comporte un anneau de relevage 152 fixé, par exemple, sur les barres 50 et 52. En outre, le chariot comporte une barre de guidage 154 situé sous la console 14. Lorsque le chariot 2 est suspendu par l'intermédiaire de l'anneau de relevage 150, comme illustré sur la figure 8, la fente 13 de l'ossature tubulaire 12 est dirigée vers le bas et la barre de guidage 154 est verticale. Cette barre est disposée juste au bord de la fente 13 de l'ossature tubulaire 12 et de son prolongement dans la console 14. Lorsque le rotor 48 est suspendu par l'anneau de relevage 152, toutes les fentes de ce rotor sont également dirigées vers le bas, à savoir les fentes des couronnes dentées avant et arrière ainsi que les fentes des flasques avant et arrière 54 et 56. Par conséquent, les fentes du rotor sont alignées avec la fente 13 de l'ossature tubulaire 12 du chariot 2 ce qui ménage un passage pour l'entrée du câble porteur 22 à l'intérieur 15 de l'ossature tubulaire 12. Dans cette position du rotor la fusée 80 et le dispositif d'équilibrage 90 sont situés dans un plan horizontal de manière à ne pas gêner l'introduction du câble. De cette manière la mise en place de la machine sur le câble porteur s'effectue de manière très simple. Il suffit de la suspendre par exemple sous une grue ou un hélicoptère par l'intermédiaire d'élingues 156 aux anneaux de relevage 150 et 152. Par le simple jeu de la gravité, ceci à pour effet de diriger vers le bas les fentes du chariot et du rotor de telle sorte que la machine peut être mise en place sur le câble par un simple mouvement de descente verticale. Dans cette position la barre de guidage 154 est verticale. Pour introduire le câble dans les fentes, il suffit de déplacer la machine jusqu'à ce que le câble vienne buter contre la barre de guidage et, dans cette position de descendre la machine. Le câble vient alors se placer automatiquement dans les gorges des roues.

Le retrait de la machine du câble porteur s'effectue tout aussi simplement. Il suffit, de la même manière, de passer des élingues 156 dans les anneaux de relevage et d'exercer une traction vers le haut sur ces élingues pour que les fentes s'alignent. La poursuite du mouvement vertical permet donc de relever la machine. Le temps nécessaire à la mise en place de la machine et à son retrait est donc très réduit par rapport aux machines de spiralage de l'art antérieur de telle sorte que son rendement est nettement amélioré.

## Revendications

1. Machine de pose de câble optique autour d'un câble porteur, comprenant un chariot (2) constitué d'un châssis (6) ayant une première et une seconde extrémités reliées par une ossature (12) et de deux roues (8, 10) montées aux extrémités du châssis et aptes à rouler sur le câble porteur ; un ensemble tournant comprenant un rotor (48) monté tournant sur le châssis ; des moyens d'entraînement du rotor en rotation autour de son axe de rotation, l'ossature (12) comportant un passage de câble (13) de manière à permettre l'introduction du câble porteur dans l'ossature ; le rotor (40) étant monté tournant sur le châssis (6) par l'intermédiaire de deux paliers interrompus par des passages de câble alignés avec le passage de câble de l'ossature (12); le rotor (48) comportant également un passage de câble, chaque passage de câble ayant une largeur au moins égale au diamètre du câble porteur (22) de manière à permettre introduction du câble porteur (22) dans l'ossature (12) lorsque les passages de câble (13) de l'ossature (12) et des paliers sont alignés avec le passage de câble du rotor **caractérisée en ce que** le châssis (6) et le rotor (48) comportent chacun un anneau de relevage (150, 152), l'orientation de ces anneaux par rapport aux passages de câble étant telle que, lorsque la machine est suspendue aux anneaux, le passage de câble du rotor et les passages de câble des paliers sont alignés et orientés vers le bas de manière à permettre l'introduction du câble porteur (22) dans l'espace intérieur (15) de l'ossature (12) lorsque le chariot (2) est mis en place sur le câble porteur (22) par un mouvement de descente verticale.

2. Machine selon la revendication 1, **caractérisée en ce que** le rotor (48) comporte une barre de guidage (154) disposée au bord de son passage de câble et qui, lorsque la machine est suspendue par les anneaux de relevage (150, 152) est orienté sensiblement verticalement.

3. Machine selon la revendication 1 ou 2, **caractérisée en ce que** le rotor comporte d'une part une fusée (80) apte à recevoir la bobine (82) et d'autre un dispositif d'équilibrage (90) de cette bobine (82), la fusée (80) et le dispositif d'équilibrage (90) étant situés dans un plan sensiblement horizontal lorsque la machine est suspendue par ses anneaux de relevage (150, 152) .

4. Machine selon l'une des revendications 1 à 3, **caractérisée en ce que** les moyens d'entraînement en rotation du rotor autour de son axe de rotation comprennent une couronne dentée menée (62) solidaire d'une première extrémité du rotor (48) et comportant un passage de câble (64) aligné avec celui du rotor ; deux pignons de transmission engrènant chacun avec la couronne dentée (62), l'espacement entre les points d'engrènement des deux pignons étant au moins égal à la largeur du passage de câble (64) de la couronne dentée (62).

5. Machine selon la revendication 4, **caractérisée en ce que** les deux pignons de transmission sont deux pignons jumeaux.

6. Machine selon l'une des revendications 1 à 5, **caractérisée en ce que** le châssis (6) comporte une console (18, 20) à chacune des extrémités de l'ossature (12), chaque console supportant une roue (8, 10) du chariot.

7. Machine selon l'une des revendications 1 à 6, **caractérisée en ce que** le rotor (48) est monté tournant sur l'ossature du chariot par l'intermédiaire de paliers à roulement ou de galets répartis à la périphérie de l'ossature, sauf en regard du passage de câble.

8. Machine selon l'une des revendications 1 à 7, **caractérisée en ce que** l'espace intérieur (15) de l'ossature (12) présente une plus petite dimension intérieure au moins égale au diamètre d'un manchon de raccordement de deux tronçons du câble porteur.

9. Machine selon la revendication 8, **caractérisée en ce que** la plus petite dimension intérieure de l'ossature est au moins égale à 80mm.

10. Machine selon l'une des revendications 1 à 9, **caractérisée en ce que** le diamètre des roues (8, 10) du chariot est au moins égal à quatre fois le diamètre d'un manchon de raccordement de deux tronçons du câble porteur.

11. Machine selon la revendication 10, **caractérisée en ce que** le diamètre des roues du chariot est au moins égal 320mm.

12. Machine selon l'une des revendications 1 à 11, **caractérisée en ce que** la distance entre un point de contact d'une roue (8, 10) du chariot et une extrémité de l'ossature la plus proche de cette roue est inférieure à la longueur d'un manchon de raccordement de deux tronçons du câble porteur.

## Claims

1. A machine for laying an optical cable around a carrier cable, the machine comprising a trolley (2) constituted by a frame (6) having a first end and a second end that are interconnected via a framework (12), and by two wheels (8, 10) mounted at the ends of the frame and suitable for running on the carrier cable; a rotary assembly comprising a rotor (48) mounted to rotate on the frame; drive means for driving the rotor in rotation about its axis of rotation; where the framework (12) is provided with a cable passageway (13) so as to enable the carrier cable to be inserted into the framework; the rotor (48) being mounted to rotate on the frame (6) via two bearings that are interrupted by cable passageways which are aligned with the cable passageway in the framework (12); the rotor (48) also being provided with a cable passageway, each cable passageway having a width at least equal to the diameter of the carrier cable (22) so as to enable the carrier cable (22) to be inserted into the framework (12) when the cable passageways (13) in the framework (12) and in the bearings are aligned with the cable passageway in the rotor, the machine being **characterized in that** the frame (6) and the rotor (48) are provided with respective lifting hoops (150, 152), the angular positioning of the rings relative to the cable passageways being such that, when the machine is suspended from the hoops, the cable passageway in the rotor and the cable passageways in the bearings are aligned and face downwards so as to enable the carrier cable (22) to be inserted into the internal space (15) of the framework (12) while the trolley (2) is being put in place on the carrier cable (22) by being lowered vertically.

2. A machine according to claim 1, **characterized in that** the rotor (48) is provided with a guide bar (154) disposed on the edge of its cable passageway and which, when the machine is suspended from its lifting hoops (150, 152), extends substantially vertically.

3. A machine according to claim 1 or claim 2, **characterized in that** the rotor is provided both with a spindle (80) suitable for receiving the reel (82) and also with a balancing device (80) for counterbalancing said reel (82), the spindle (80) and the balancing device (90) being situated in a substantially horizontal plane when the machine is suspended from its lifting hoops (150, 152).

4. A machine according to any one of claims 1 to 3, **characterized in that** the drive means for driving the rotor in rotation about its axis of rotation comprise a driven toothed ring (62) secured to a first end of the rotor (48), and provided with a cable passageway (64) in alignment with the cable passageway in the rotor; two transmission cogs meshing with the toothed ring (62), the spacing between the points at which the two cogs mesh with said ring being at least equal to the width of the cable passageway (64) in the toothed ring (62).

5. A machine according to claim 4, **characterized in that** the two transmission cogs are twin cogs.

6. A machine according to any one of claims 1 to 5, **characterized in that** the frame (6) is provided with a bracket (18, 20) at each of the ends of the framework (12), each bracket supporting a wheel (8, 10) of the trolley.

7. A machine according to any one of claims 1 to 6, **characterized in that** the rotor (48) is mounted to rotate on the framework of the trolley via ball bearings or rollers distributed around the periphery of the framework, except facing the cable passageway.

8. A machine according to any one of claims 1 to 7, **characterized in that** the internal space (15) of the framework (12) has a smallest inside dimension that is at least equal to the diameter of a sleeve for interconnecting two segments of the carrier cable.

9. A machine according to claim 8, **characterized in that** the smallest inside dimension of the framework is at least equal to 80 mm.

10. A machine according to any one of claims 1 to 9, **characterized in that** the diameter of the wheels (8, 10) of the trolley is at least four times the diameter of a sleeve for interconnecting two segments of the carrier cable.

11. A machine according to claim 10, **characterized in that** the diameter of the wheels of the trolley is at least equal to 320 mm.

12. A machine according to any one of claims 1 to 11, **characterized in that** the distance between a point of contact of a wheel (8, 10) of the trolley and that end of the framework which is closer to said wheel is less than the length of a sleeve for interconnecting two segments of the carrier cable.

## Patentansprüche

1. Maschine zum Legen eines optischen Kabels um ein Tragkabel herum, umfassend einen Wagen (2), der besteht aus einem Gestell (6) mit einem ersten und einem zweiten Ende, die durch ein tragendes Teil (12) verbunden sind, und aus zwei Rädern (8, 10), die an den Enden des Gestells angebracht sind und in der Lage sind, auf dem Tragkabel zu rollen; eine Drehanordnung, die einen drehbar auf dem Gestell angebrachten Rotor (48) umfasst; und Mittel zum Rotationsantrieb des Rotors um seine Rotationsachse, wobei das tragende Teil (12) eine Kabeldurchführung (13) aufweist, um die Einführung des Tragkabels in das tragende Teil zu ermöglichen; wobei der Rotor (48) drehbar auf dem Gestell (6) angebracht ist mittels zweier Lager, die von Kabeldurchführungen unterbrochen sind, die sich in einer Linie mit der Kabeldurchführung des tragenden Teils (12) befinden; wobei der Rotor (48) weiterhin eine Kabeldurchführung aufweist, wobei jede Kabeldurchführung eine Breite hat, die mindestens gleich dem Durchmesser des Tragkabels (22) ist, um die Einführung des Tragkabels (22) in das tragende Teil (12) zu ermöglichen, wenn sich die Kabeldurchführungen (13) des tragenden Teils (12) und der Lager in einer Linie mit der Kabeldurchführung des Rotors befinden, **dadurch gekennzeichnet, dass** das Gestell (6) und der Rotor (48) jeweils einen Hebering (150, 152) aufweisen, wobei die Ausrichtung dieser Ringe in Bezug auf die Kabeldurchführungen so ist, dass, wenn die Maschine an den Ringen aufgehängt ist, die Kabeldurchführung des Rotors und die Kabeldurchführungen der Lager sich in einer Linie befinden und nach unten ausgerichtet sind, um die Einführung des Tragkabels (22) in den Innenraum (15) des tragenden Teils (12) zu ermöglichen, wenn der Wagen (2) auf dem Tragkabel (22) durch eine vertikale Abwärtsbewegung platziert wird.

2. Maschine nach Anspruch 1, **dadurch gekennzeichnet, dass** der Rotor (48) einen Führstab (154) aufweist, der am Rand seiner Kabeldurchführung angeordnet ist und der, wenn die Maschine an den Heberingen (150, 152) aufgehängt ist, im Wesentlichen vertikal ausgerichtet ist.

3. Maschine nach Anspruch 1 oder 2, **dadurch gekennzeichnet, dass** der Rotor einerseits einen Zapfen (80), der sich zum Aufnehmen der Spule (82) eignet, und andererseits eine Ausbalanciereinrichtung (90) für diese Spule (82) aufweist, wobei der Zapfen (80) und die Ausbalanciereinrichtung (90) in einer im Wesentlichen horizontalen Ebene liegen, wenn die Maschine an ihren Heberingen (150, 152) aufgehängt ist.

4. Maschine nach einem der Ansprüche 1 bis 3, **dadurch gekennzeichnet, dass** die Mittel zum Rotationsantrieb des Rotors um dessen Rotationsachse einen angetriebenen Zahnkranz (62) umfassen, der mit einem ersten Ende des Rotors (48) schlüssig verbunden ist und eine Kabeldurchführung (64) aufweist, die sich mit jener des Rotors in einer Linie befindet; und zwei Übertragungsritzel, die jeweils mit dem Zahnkranz (62) in Eingriff stehen, wobei der Abstand zwischen den Eingriffspunkten der beiden Ritzel mindestens gleich der Breite der Kabeldurchführung (64) des Zahnkranzes (62) ist.

5. Maschine nach Anspruch 4, **dadurch gekennzeichnet, dass** die beiden Übertragungsritzel zwei Zwillingsritzel sind.

6. Maschine nach einem der Ansprüche 1 bis 5, **dadurch gekennzeichnet, dass** das Gestell (6) eine Konsole (18, 20) an jedem der Enden des tragenden Teils (12) aufweist, wobei jede Konsole ein Rad (8, 10) des Wagens trägt.

7. Maschine nach einem der Ansprüche 1 bis 6, **dadurch gekennzeichnet, dass** der Rotor (48) drehbar auf dem tragenden Teil des Wagens angebracht ist mittels Wälzlagern oder Rollen, die in der Peripherie des tragenden Teils, außer gegenüber der Kabeldurchführung, verteilt sind.

8. Maschine nach einem der Ansprüche 1 bis 7, **dadurch gekennzeichnet, dass** der Innenraum (15) des tragenden Teils (12) ein kleineres Innenmaß aufweist, das mindestens gleich dem Durchmesser einer Verbindungsmuffe zweier Abschnitte des Tragkabels ist.

9. Maschine nach Anspruch 8, **dadurch gekennzeichnet, dass** das kleinste Innenmaß des tragenden Teils mindestens gleich 80 mm ist.

10. Maschine nach einem der Ansprüche 1 bis 9, **dadurch gekennzeichnet, dass** der Durchmesser der Räder (8, 10) des Wagens mindestens gleich dem Vierfachen des Durchmessers einer Verbindungsmuffe zweier Abschnitte des Tragkabels ist.

11. Maschine nach Anspruch 10, **dadurch gekennzeichnet, dass** der Durchmesser der Räder des Wagens mindestens gleich 320 mm ist.

12. Maschine nach einem der Ansprüche 1 bis 11, **dadurch gekennzeichnet, dass** die Strecke zwischen einem Kontaktpunkt eines Rads (8, 10) des Wagens und einem Ende des tragenden Teils, das diesem Rad am nächsten liegt, kürzer ist als die Länge einer Verbindungsmuffe zweier Abschnitte des Tragkabels.
